# EUROPÄISCHE PATENTSCHRIFT

(11) **EP 1 393 938 B1**
(45) Veröffentlichungstag und Bekanntmachung des Hinweises auf die Patenterteilung: **21.12.2005**
(21) Anmeldenummer: 03017790.1
(22) Anmeldetag: 04.08.2003
(51) Int. Cl.: B60H 1/00

(54) **Verfahren und Vorrichtung zur Temperierung von Luft in wenigstens zwei Bereichen eines Raumes**
Method and device for the temperature treatment of air in at least two zones of a space
Procede et dispositif de traitement thermique d'air dans au moins deux zones d'un espace

(30) Priorität: 08.08.2002 DE 10236457
(43) Veröffentlichungstag der Anmeldung: 03.03.2004
(73) Patentinhaber: Delphi Technologies, Inc., Troy, MI 48007 (US)
(72) Erfinder: Van Hauten, Hartmut E., 55129 Mainz (DE); Petesch, Jean-Claude, 8283 Kehlen (LU); Gallagher, Mark M., 55122 Mainz (DE)
(74) Vertreter: Manitz, Finsterwald & Partner GbR

(56) Entgegenhaltungen:
- DE-A- 19 919 132
- DE-C- 19 708 383
- DE-C- 19 919 975

## Beschreibung

Die vorliegende Erfindung betrifft ein Verfahren zur Steuerung der Stärke und Temperatur von wenigstens zwei temperierten Luftströmen, ein Verfahren zur Temperierung von Luft für wenigstens zwei Bereiche eines Raums, insbesondere eines Kraftfahrzeuginnenraums, sowie eine entsprechende Versorgungsvorrichtung zur Bereitstellung von Luftströmen für wenigstens zwei Bereiche eines Raumes.

Moderne Kraftfahrzeuge sind häufig mit Klimatisierungseinrichtungen ausgestattet, mittels derer die Luft in einem Innenraum des Kraftfahrzeugs temperierbar ist. Um dem unterschiedlichen Wärmeempfinden verschiedener Insassen Rechnung tragen zu können, ist es wünschenswert, dass unterschiedliche Bereiche des Innenraums individuell temperierbar sind. Dazu können für die verschiedenen Bereiche Erfassungseinrichtungen vorgesehen sein, mittels derer von einem Insassen eine gewünschte Soll-Temperatur und Soll-Stärke eines dem jeweiligen Bereich zur Klimatisierung zuzuführenden Luftstroms vorgebbar ist.

Der Einfachheit halber werden alle Luftströme zur Speisung der Bereiche meist aus Warm- und Kaltluft aus einer gemeinsamen Quelle gebildet. Dies hat zur Folge, dass bei Veränderung der Einstellungen für einen Bereich durch die veränderten Strömungsverhältnisse auch die Luftströme für andere Bereiche verändert werden. Diese Änderungen können dann für die Insassen in den anderen Bereichen unangenehm sein und eine Änderung der Einstellungen für diese Bereiche erfordern.

Ein Ausweg besteht darin, für jeden Bereich eine eigene Warm- und Kaltluftquelle bereitzustellen. Der technische Aufwand und die damit verbundenen Kosten sind jedoch beispielsweise für Anwendungen im Kraftfahrzeug nicht tragbar.

Ein Verfahren gemäß dem Oberbegriff des Anspruchs 1 und eine Vorrichtung gemäß dem Oberbegriff des Anspruchs 13 sind aus der DE-A-199 19 132 bekannt.

Der vorliegenden Erfindung liegt die Aufgabe zugrunde, Verfahren und Mittel bereitzustellen, um auf einfache Weise wenigstens zwei verschiedene Bereiche eines Raums jeweils gut mit temperierter Luft vorgegebener Temperatur und Stärke zu versorgen und dabei eine noch individuellere Einstellung der Luftzufuhr zu ermöglichen.

Die Aufgabe wird gelöst durch ein Verfahren zur Steuerung der Stärke und Temperatur von wenigstens zwei temperierten Luftströmen, die zur Temperierung wenigstens zweier entsprechender Bereiche eines Raums, insbesondere eines Kraftfahrzeuginnenraums, dienen, mit den Merkmalen des Anspruchs 1.

Das erfindungsgemäße Verfahren zur Steuerung der Stärke und Temperatur von wenigstens zwei temperierten Luftströmen, die zur Temperierung wenigstens zweier entsprechender Bereiche eines Raums, insbesondere eines Kraftfahrzeuginnenraums, dienen und die durch Bereitstellung eines Kalt- und eines Warmluftstroms, deren Temperaturen einzeln und/oder deren Stärken einzeln oder summiert steuerbar sind, Bildung jeweils eines Kalt- und Warmluftteilstroms für jeden der Bereiche aus dem Kalt- und dem Warmluftstrom, jeweiliger Drosselung oder Zusatzförderung der Teilströme mit jeweils entsprechenden, steuerbaren Drosseleinrichtungen und/oder wenigstens einer Zusatzfördereinrichtung und Vermischung entsprechender Teilströme für die jeweiligen Bereiche erzeugt werden, sieht vor, dass für jeden der Bereiche eine Soll-Temperatur und eine Soll-Stärke eines dem Bereich zuzuführenden Luftstroms gesetzt werden und dass die Stärke des Kaltluftstroms und/oder des Warmluftstroms und/oder wenigstens eine der Drosseleinrichtungen bzw. die Zusatzfördereinrichtung in Abhängigkeit von allen gesetzten Soll-Temperaturen und Soll-Stärken so gesteuert werden, dass für jeden der Bereiche jeweils der temperierte Luftstrom im Wesentlichen die vorgegebene Soll-Temperatur und die vorgegebene Soll-Stromstärke aufweist. Dieses erfindungsgemäße Verfahren wird im Folgenden auch als Steuerverfahren bezeichnet.

Da es häufig wünschenswert ist, einen Bereich zwar mit Luft einer vorgegebenen Soll-Temperatur zu versorgen, aber Teilbereiche des Bereichs, beispielsweise einen Kopf- oder Fußraum, mit unterschiedlich starken Luftströmen für die Teilbereiche zu versorgen, ist bei dem erfindungsgemäßen Steuerverfahren ferner vorgesehen, dass wenigstens einer der Bereiche, für den ein erster der beiden temperierten Luftströme vorgesehen ist, in zwei Teilbereiche unterteilt ist, dass die Stärken wenigstens zweier Teilbereichsluftströme für die Teilbereiche, die durch Aufteilung des ersten temperierten Luftstroms und eine Drosselung der Teilbereichsluftströme mit jeweils entsprechenden, steuerbaren Drosseleinrichtungen gebildet werden, gesteuert werden, dass statt der Soll-Temperatur und Soll-Stärke des ersten Luftstroms eine gemeinsame Soll-Temperatur und jeweils eine Soll-Stärke der Teilbereichsluftströme gesetzt werden und die Soll-Stärke des ersten Luftstroms aus den Soll-Stärken der Teilbereichsluftströme und dessen Soll-Temperatur aus der gemeinsamen Soll-Temperatur bestimmt wird, und dass die Stärke des Kaltluftstroms und/oder des Warmluftstroms und/oder wenigstens eine der Drosseleinrichtungen bzw. die Zusatzfördereinrichtung zusätzlich in Abhängigkeit von den gesetzten Soll-Stärken der Teilbereichsluftströme so gesteuert werden, dass für jeden der Bereiche und Teilbereiche jeweils der temperierte Luftstrom bzw. Teilbereichsluftstrom im Wesentlichen die vorgegebene Soll-Temperatur und die vorgegebene Soll-Stärke aufweist. Die Steuerung des Luftstroms für den in Teilbereiche unterteilten Bereich bleibt also im Wesentlichen erhalten, wobei allerdings dessen Soll-Stärke aus den Soll-Stärken der Teilbereichsluftströme bestimmt wird.

Die Aufgabe wird weiterhin gelöst durch ein Verfahren zur Temperierung von Luft in wenigstens zwei Bereichen eines Raums, insbesondere eines Kraftfahrzeuginnenraums, mit den Merkmalen des Anspruchs 9.

Bei dem erfindungsgemäßen Verfahren zur Temperierung von Luft für wenigstens zwei Bereiche eines Raums, insbesondere eines Kraftfahrzeuginnenraums werden ein Kalt- und ein Warmluftstrom bereitgestellt, deren Temperaturen einzeln und/oder deren Stärken einzeln oder summiert steuerbar sind. Aus dem Kalt- und dem Warmluftstrom wird jeweils wenigstens ein Teilstrom für jeden der Bereiche gebildet, und es werden für jeden Bereich jeweils die entsprechenden Teilströme mittels einer entsprechenden steuerbaren Drosseleinrichtung und/oder Zusatzfördereinrichtung gedrosselt und gemischt, wobei die Stärke des Kaltluftstroms und/oder des Warmluftstroms und/oder die Drosseleinrichtungen und/oder die Zusatzfördereinrichtung mit dem erfindungsgemäßen Verfahren zur Steuerung gesteuert werden.

Die Aufgabe wird weiterhin gelöst durch eine Versorgungsvorrichtung zur Bereitstellung von Luftströmen für wenigstens zwei Bereiche eines Raumes, insbesondere eines Kraftfahrzeuginnenraums, mit jeweils bereichsspezifischer Stärke und Temperatur mit den Merkmalen des Anspruchs 13.

Die erfindungsgemäße Versorgungsvorrichtung zur Bereitstellung von Luftströmen für wenigstens zwei Bereiche eines Raumes, insbesondere eines Kraftfahrzeuginnenraums, mit jeweils bereichsspezifischer Stärke und Temperatur umfasst eine Kalt- und Warmluftquelle, mittels derer ein Kalt- und ein Warmluftstrom, deren Temperaturen einzeln und/oder deren Stärken einzeln oder summiert steuerbar sind, erzeugbar und über einen Kalt- bzw. Warmluftauslass der Kalt- und Warmluftquelle abgebbar ist, mit dem Kalt- bzw. Warmluftauslass verbundene Verzweigungskanäle mit steuerbaren Drosseleinrichtungen und/oder wenigstens einer Zusatzfördereinrichtung, mittels derer aus dem Kalt- bzw. Warmluftstrom für jeden der Bereiche getrennt steuerbar Kalt- und Warmluftteilströme bereitstellbar sind, wenigstens eine Erfassungseinrichtung zur Erfassung jeweils einer Soll-Temperatur und einer Soll-Stärke des dem jeweiligen Bereich getrennt zuzuführenden Luftstroms, eine mit der Erfassungseinrichtung verbundene Steuereinrichtung zur Steuerung der Kalt- und Warmluftquelle und der Drosseleinrichtungen und/oder Zusatzfördereinrichtung in Abhängigkeit von den Soll-Temperaturen und Soll-Stärken der Luftströme für die Bereiche, mittels derer in Abhängigkeit von den Soll-Temperaturen und/oder den Soll-Stärken der Luftströme für die Bereiche die Kalt- und Warmluftquelle und die Drosseleinrichtungen bzw. die Zusatzfördereinrichtung so steuerbar sind, dass die Stärken und Temperaturen der Luftströme für alle Bereiche im Wesentlichen mit den Soll-Stärken und Soll-Temperaturen für diese Bereiche übereinstimmen.

Bei der erfindungsgemäßen Versorgungsvorrichtung ist ferner vorgesehen, dass die Versorgungsvorrichtung zur Bereitstellung von zwei gleich temperierten Teilbereichsluftströmen für zwei Teilbereiche eines der Bereiche anstatt eines temperierten Luftstroms für diesen Bereich ausgebildet ist, dass für diesen Bereich vorgesehene Verzweigungskanäle für Kalt- und Warmluft in einen Kanal münden, der in Teilbereichskanäle verzweigt, in denen jeweils eine steuerbare, mit der Steuereinrichtung verbundene Drosseleinrichtung angeordnet ist, dass die Erfassungseinrichtung statt zur Erfassung der Soll-Stärke und Soll-Temperatur des dem Bereich zuzuführenden Luftstroms zur Erfassung von Soll-Stärken und einer gemeinsamen Soll-Temperatur der Teilbereichsluftströme ausgebildet ist, dass die Steuereinrichtung zur Steuerung der Kalt- und Warmluftquelle und der Drosseleinrichtungen und/oder der Zusatzfördereinrichtung in Abhängigkeit von den Soll-Temperaturen und Soll-Stärken der Luftströme für die Bereiche und Teilbereiche, mittels derer in Abhängigkeit von den Soll-Temperaturen und/oder den Soll-Stärken der Luftströme für die Bereiche und die Teilbereiche die Kalt- und Warmluftquelle und die Drosseleinrichtungen bzw. die Zusatzfördereinrichtung so steuerbar sind, dass die Stärken und Temperaturen der Luftströme für alle Bereiche und Teilbereiche im Wesentlichen mit den Soll-Stärken und Soll-Temperaturen für diese Bereiche übereinstimmen.

Das erfindungsgemäße Verfahren zur Temperierung von Luft ist mit der erfindungsgemäßen Vorrichtung durchführbar, soweit die Steuereinrichtung zur Durchführung des erfindungsgemäßen Steuerverfahrens ausgebildet ist.

Bei dem erfindungsgemäßen Verfahren ist es vorgesehen, zunächst einen Kalt- und einen Warmluftstrom bereitzustellen, deren Temperaturen einzeln und/oder deren Stärken einzeln oder summiert steuerbar sind. Hierzu sind bei der erfindungsgemäßen Vorrichtung eine Kalt- und eine Warmluftquelle vorgesehen, mit der entsprechende Ströme bereitstellbar sind. Obwohl eine Steuerung der Temperatur allein oder in Kombination mit einer Steuerung der Stärke des Kalt- bzw. Warmluftstroms grundsätzlich vorgesehen ist, wird, da eine Temperatursteuerung in Kraftfahrzeugen vergleichsweise aufwendig sein kann, zweckmäßig meist nur eine Steuerung der Stärke durchgeführt. Die Stärken von Kalt- und Warmluftstrom können einzeln gesteuert werden. Es ist jedoch auch möglich, die Stärken summiert zu steuern, d.h. nur die Summe der Stärken von Kalt- und Warmluftstrom, d.h. deren Gesamtstärke, zu steuern.

Unter der Stärke eines Luftstroms kann im Rahmen der Erfindung eine einem Massenstrom oder einem Volumenstrom des Luftstroms entsprechende Größe verstanden werden.

Aus dem Kalt- und Warmluftstrom werden dann für jeden der Bereiche wenigstens ein Kalt- und ein Warmluftteilstrom gebildet. In der erfindungsgemäßen Versorgungsvorrichtung sind hierzu mit einem Kalt- bzw. Warmluftauslass der Kalt- bzw. Warmluftquelle jeweils Verzweigungskanäle verbunden, in denen die Teilströme durch die Verzweigungen bildbar und dann weiter führbar sind.

Zur Steuerung der Stärke der Kalt- und Warmluftteilströme für die jeweiligen Bereiche sind Drosseleinrichtungen und/oder wenigstens eine Zusatzfördereinrichtung vorgesehen, mittels derer die entsprechenden Teilströme drosselbar bzw. zusätzlich verstärkbar sind. Bei der Zusatzfördereinrichtung kann es sich insbesondere um ein steuerbares Zusatzgebläse handeln.

Zur Bildung der temperierten Teilströme werden die jeweiligen Kalt- und Warmluftteilströme miteinander gemischt, wobei sich ein temperierter Luftstrom mit einer Temperatur und Stärke ergibt, die sich unter anderem aus den Temperaturen und Stärken der Teilströme ergeben.

Um die Temperatur und Stärke der temperierten Luftströme steuern zu können, werden zunächst Soll-Temperaturen und Soll-Stärken der Luftströme für die jeweiligen Bereiche gesetzt. Das Setzen dieser Soll-Größen kann dabei durch einen Benutzer oder automatisch, beispielsweise durch Steuer- oder Regeleinrichtungen, erfolgen.

Die erfindungsgemäße Versorgungsvorrichtung weist hierzu wenigstens eine Erfassungseinrichtung zur Erfassung jeweils einer Soll-Temperatur und einer Soll-Stärke des dem jeweiligen Bereich zuzuführenden Luftstroms auf. Grundsätzlich kann die Erfassungseinrichtung eine elektrische bzw. elektronische Schnittstelle aufweisen, über die beispielsweise eine automatische Kontrolleinrichtung auf Signale von Temperatursensoren und/oder in Abhängigkeit von Uhrzeiten, entsprechende Soll-Temperaturen und/oder Soll-Stärken setzt. Sie kann jedoch auch entsprechende Kontrolleinrichtungen selbst umfassen.

Es können jedoch auch alternativ oder zusätzlich für jeden der Bereiche entsprechend Eingabeorgane, beispielsweise Drehknöpfe oder Schieber, vorgesehen sein, deren Bewegung oder Stellung schließlich in elektrische Größen umsetzbar ist, die dann zum Setzen von Soll-Temperaturen und Soll-Stärken dienen. In letzterem Fall brauchen für den Benutzer die Soll-Temperatur und Soll-Stärke nicht notwendig als physikalische Größen eingegeben zu werden. Für den Benutzer kann vielmehr auch eine andere beliebige Skalierung verwendet werden, die dann mittels einer Kennlinie für das Eingabeorgan in für die Steuerung geeignete Größen umsetzbar ist. Insbesondere bei Bedienung durch einen Benutzer können mehrere Erfassungseinrichtungen vorgesehen sein, die zweckmäßig nahe den zu temperierenden Bereichen angeordnet sein können.

Das Setzen der Soll-Temperaturen und Soll-Stärken kann dabei zum einen bei einer festgestellten Bedienung eines Erfassungsorgans oder einem Signal der Steuereinrichtung erfolgen. Es kann aber auch wiederholt, insbesondere periodisch, die Stellung der Erfassungsorgane abgefragt bzw. erfasst werden.

Erfindungsgemäß werden in Abhängigkeit von allen gesetzten Soll-Temperaturen und Soll-Stärken die Stärke und/ oder Temperatur des Kalt-und Warmluftstroms und die Stärke wenigstens einer Drosseleinrichtung bzw. Zusatzfördereinrichtung so gesteuert, dass für jeden der Bereiche jeweils der temperierte Luftstrom im Wesentlichen die vorgegebene Soll-Temperatur und die vorgegebene Soll-Stromstärke aufweist.

Dass ein temperierter Luftstrom im Wesentlichen die vorgegebene Soll-Temperatur und die vorgegebene Soll-Stärke aufweist, bedeutet dabei, dass die durch die Steuerung erzielte Temperatur bzw. Stärke des Luftstroms höchstens um einen vorgegebenen maximalen Fehler, der vorzugsweise kleiner als 10% bezogen auf den jeweiligen Soll-Wert ist, von der Soll-Temperatur bzw. Soll-Stärke abweichen. Vorzugsweise ist der maximale Fehler kleiner als 5%. Alternativ kann der maximale Fehler auch als maximale absolute Abweichung angegeben werden.

Die erfindungsgemäße Vorrichtung weist zur Steuerung eine Steuereinrichtung auf, die mit der Erfassungseinrichtung verbundene Eingängen und mit den Drosseleinrichtungen bzw. Zusatzfördereinrichtungen und den Kalt- bzw. Warmluftquellen verbundene Ausgänge umfasst und die vorzugsweise zur Ausführung des erfindungsgemäßen Steuerverfahrens ausgebildet ist.

Durch diese Steuerung ergibt sich insbesondere der große Vorteil, dass unabhängig von Änderungen der Soll-Temperatur und/oder der Soll-Stärke eines Luftstroms für einen Bereich die Soll-Temperatur und Soll-Stärke des Luftstroms für einen anderen Bereich im Wesentlichen, d.h. entsprechend der oben angegebenen Fehlerintervalle, konstant gehalten werden kann.

Es ergibt sich so in einfacher Weise eine sehr genaue und zuverlässige Steuerung der Versorgung der verschiedenen Bereiche mit temperierter Luft, ohne dass weitere aufwändige Kalt- oder Warmluftquellen notwendig wären. Darüber hinaus kann bei zweckmäßiger Auslegung der Steuerung auf eine aufwändige Regelung, die entsprechende Fühler für die temperierten Luftströme erfordern würde, verzichtet werden.

Weiterbildungen und bevorzugte Ausführungsformen der Erfindung sind in der Beschreibung, den Ansprüchen und den Zeichnungen beschrieben.

Bei dem erfindungsgemäßen Verfahren zur Temperierung von Luft ist es bevorzugt, dass wenigstens einer der Bereiche, für den ein erster der beiden temperierten Luftströme vorgesehen ist, in zwei Teilbereiche unterteilt ist, dass für die zwei Teilbereiche aus dem ersten temperierten Luftstrom zwei Teilbereichsluftströme gebildet und mit jeweils entsprechenden, steuerbaren Drosseleinrichtungen gedrosselt werden, wobei die Stärke des Kaltluftstroms und/oder des Warmluftstroms und/oder die Drosseleinrichtungen und/ oder die Zusatzfördereinrichtung mit dem eben erwähnten erfindungsgemäßen Steuerverfahren gesteuert werden.

Grundsätzlich kann die Steuereinrichtung der erfindungsgemäßen Versorgungsvorrichtung als feste analoge oder digitale Schaltung ausgebildet sein, mit der das erfindungsgemäße Steuerverfahren durchführbar ist. Es ist jedoch es bevorzugt, dass die Steuereinrichtung eine Schnittstelle für die Erfassungseinrichtung sowie Schnittstellen für die Kalt- und Warmluftquelle, die Drosseleinrichtungen und/oder die Zusatzfördereinrichtung, eine Speichereinrichtung und einen mit den Schnittstellen und der Speichereinrichtung verbundenen Prozessor aufweist, wobei in der Speichereinrichtung ein mit dem Prozessor ausführbares Programm zur Durchführung des erfindungsgemäßen Steuerverfahrens gespeichert ist. Eine solche Steuereinrichtung kann dann auch bei variierender Auslegung der restlichen Versorgungsvorrichtung in gleicher Form verwendet werden, es muss jeweils nur das Programm angepasst werden.

Bei den erfindungsgemäßen Verfahren ist es bevorzugt, dass, insbesondere bei Änderung einer Soll-Temperatur und/oder einer Soll-Stromstärke, die Stärke der Drosselung bzw. Zusatzförderung aller Teilströme, soweit gegeben die Stärke der Drosselung der Teilbereichsluftströme, und die Stärken und/oder Temperaturen des Kalt- und des Warmluftstroms unter Verwendung eines Modells gesteuert werden, das Soll-Temperaturen und Soll-Stromstärken für die Bereiche bzw. Teilbereiche mit den zur Erreichung dieser Werte notwendigen Stärken der Drosselung bzw. Zusatzförderung aller Teilströme, soweit gegeben der Stärken der Drosselung der Teilbereichsluftströme und der Stärken und/oder Temperaturen des Kalt-und des Warmluftstroms verknüpft. Bei diesen Modellen kann es sich grundsätzlich um beliebige Abbildungen handeln, mittels derer die Soll-Temperaturen und Soll-Stromstärken für die Bereiche bzw. Teilbereiche mit den zur Erreichung dieser Werte notwendigen Stärken der Drosselung bzw. Zusatzförderung aller Teilströme bzw. den notwendigen Stärken der Drosselung der Teilbereichsluftströme und den Stärken und/oder Temperaturen des Kalt- und des Warmluftstroms ermittelbar sind.

Die verwendeten Modelle können bei einer besonders bevorzugten Ausführungsform insbesondere auf physikalischen, strömungstechnischen und/oder thermodynamischen Gesetzen basieren und durch entsprechende, parametrisierte Modellgleichungen bzw. mathematische Beziehungen gegeben sein. Die Modelle können jeweils insbesondere auch Parameter aufweisen, die von den Kenngrößen einzelner Bauteile, insbesondere der Drosseleinrichtungen, in bekannter Weise abhängen. Dabei können für gesetzte Soll-Temperaturen und Soll-Stromstärken für die Bereiche bzw. Teilbereiche jeweils neu die zur Erreichung dieser Werte notwendigen Stärken der Drosselung bzw. Zusatzförderung aller Teilströme und die Stärken und/oder Temperaturen des Kalt- und des Warmluftstroms berechnet werden, was bei komplizierten, auf physikalischen, strömungstechnischen und/oder thermodynamischen Zusammenhängen aufbauenden Modellen jedoch erheblichen Rechenaufwand erfordern kann.

Es ist daher bevorzugt, dass Kennfelder vorgegeben werden, durch die jeweils für vorgegebene Soll-Temperaturen und Soll-Stromstärken für die temperierten Luftströme für die Bereiche bzw., so weit vorhanden, die Teilbereiche die zur Erreichung dieser Soll-Werte notwendigen Stärken und/oder Temperaturen des Kalt- und Warmluftstroms und der notwendigen Stärken der Drosselung bzw. Zusatzförderung der einzelnen Teilströme bzw. die notwendigen Stärken der Drosselung der Teilbereichsluftströme gegeben sind, und dass, insbesondere bei Änderung einer Soll-Temperatur und/oder einer Soll-Stromstärke, die Stärke der Drosselung bzw. Zusatzförderung aller Teilströme bzw. der Drosselung der Teilbereichsluftströme und die Stärken und/oder Temperaturen des Kalt- und des Warmluftstroms unter Verwendung des Kennfeldes gesteuert werden.

Bei den Kennfeldern kann es sich insbesondere um einfache Input-Output-Modelle handeln, die zuvor durch geeignete Maßnahmen erhalten wurden. Diese können insbesondere auch durch geeignete parametrisierte Modelle gegeben sein, die ohne eine Ableitung aus physikalisch-technischen Beziehung einfach als Darstellung der notwendigen Abhängigkeiten gewonnen sind. Insbesondere können mehrdimensionale Polynommodelle, beispielsweise auf der Basis von Splines, verwendet werden.

Bei der erfindungsgemäßen Vorrichtung ist es zur Verwendung von Kennfeldern bevorzugt, dass in einer Speichereinrichtung wenigstens ein Kennfeld zur Durchführung des erfindungsgemäßen Steuerverfahrens speicherbar ist. Das Kennfeld kann dabei in Form von Parametern für das Kennfeld, beispielsweise bei Darstellung durch Splines in Form von entsprechenden Spline-Koeffizienten, gespeichert sein, es kann jedoch auch in diskreter Form nach Art einer Nachschlagtabelle abgelegt sein. Es wird so eine besonders einfache und schnelle Ermittlung der Stärke der Drosselung bzw. Zusatzförderung aller Teilströme bzw., soweit gegeben, der Stärke der Drosselung der Teilbereichsluftströme und der Stärke und/oder Temperatur des Kalt- und des Warmluftstroms erreicht.

Bei der Verwendung eines diskret abgespeicherten Kennfeldes ist es bevorzugt, dass, insbesondere bei Änderung einer Soll-Temperatur und/oder einer Soll-Stromstärke für einen Bereich, die Stärke der Drosselung bzw. Zusatzförderung wenigstens eines Teilstroms bzw. die Stärke der Drosselung wenigstens eines Teilbereichsluftstroms und die Stärken und/oder Temperaturen des Kalt- und des Warmluftstroms durch Interpolation oder Extrapolation aus dem diskreten Kennfeld gewonnen werden. Auf diese Weise kann bei gegebener Stützstellenzahl des Kennfeldes eine höhere Genauigkeit bzw. Auflösung des Modells in Bezug auf die unabhängigen Variablen erreicht werden. Bei gegebener Genauigkeit kann umgekehrt der notwendige Speicheraufwand reduziert werden.

Die Modelle können über die bereits erwähnte Art hinaus auf weitere unterschiedliche Arten und Weisen erhalten werden.

Bei einer Ausführungsform des erfindungsgemäßen Verfahrens ist es bevorzugt, dass das Modell unter Verwendung von Messungen an einer existierenden Versorgungsvorrichtung erhalten wird. Insbesondere kann das Modell durch Kennfelder im obigen Sinne gegeben sein. Dabei können entweder bei vorgegebenen Soll-Temperaturen und/oder Soll-Stromstärken für die Bereiche bzw., soweit gegeben, Soll-Stärken der Teilbereiche die Stärken der Drosselung bzw. Zusatzförderung aller Teilströme bzw. der Drosselung der Teilbereichsluftströme und die Stärken und/oder Temperaturen des Kalt- und des Warmluftstrom so variiert werden, dass die Soll-Werte erreicht werden. An die erhaltenen Daten kann dann ein geeignetes Modell durch Anpassung der Struktur des Modells oder insbesondere auch vorhandener Parameter angepasst werden. Alternativ können auch die Stärken der Drosselung bzw. Zusatzförderung aller Teilströme bzw., soweit gegeben, der Stärken der Teilbereichsluftströme und die Stärken und/oder Temperaturen des Kalt- und des Warmluftstrom systematisch variiert und die resultierenden Temperaturen und Stärken der Luftströme für die Bereiche ermittelt werden. Durch Invertierung des Zusammenhangs kann dann das Kennfeld, beispielsweise in diskreter Form, erhalten werden.

Alternativ oder ergänzend dazu ist es bevorzugt, dass das Modell durch Simulationsrechnungen erhalten wird. Insbesondere können hierzu numerische Rechenverfahren der Fluidmechanik bzw. -dynamik (Computational Fluid Dynamics) verwendet, bei denen an einem Rechnermodell der Versorgungseinrichtung die Strömungs- und Temperaturverhältnisse in Abhängigkeit von der Drosselung bzw. Zusatzförderung aller Teilströme bzw. der Drosselung der Teilbereichsluftströme sowie der Stärken und/oder Temperaturen des Kalt- und des Warmluftstroms berechnet werden. Zur Erstellung eines Kennfelds kann dabei grundsätzlich in ähnlicher Form vorgegangen werden, wie bei der Verwendung von Messungen.

Die Kalt- und die Warmluftquelle können insbesondere durch eine Quelle für einen Luftstrom, eine Kühl- und eine Heizeinrichtung gebildet sein, wobei es sich bei der Kühleinrichtung bzw. der Heizeinrichtung grundsätzlich um beliebige Einrichtungen zur Kühlung bzw. Erwärmung von Luft handeln kann. Insbesondere können als Kühl- bzw. Heizeinrichtungen bekannte mit einem Kältemittelkreislauf verbundene Verdampfer bzw. mit elektrisch, über Kraftstoff öder einen Kühlkreislauf einer Brennkraftmaschine beheizbare Heizkerne verwendet werden.

Grundsätzlich können die Stärke des Kalt- und des Warmluftstroms, insbesondere bei der Verwendung einer Kalt- und Warmluftquelle mit einer Kaltluftquelle und einer von dieser unabhängigen Warmluftquelle, unabhängig voneinander steuerbar sein. Solche Versorgungsvorrichtungen sind jedoch in der Regel aufwendig. Es ist daher bevorzugt, dass der Kalt- und Warmluftstrom gemeinsam mittels eines steuerbaren Gebläses gebildet werden, bzw. bei dem erfindungsgemäßen Steuerverfahren, dass zur Steuerung der Stärke des Kalt- und Warmluftstroms die Förderleistung eines den Kalt- und Warmluftstrom gemeinsam erzeugenden Gebläses gesteuert wird. Bei der erfindungsgemäßen Versorgungsvorrichtung ist es dazu bevorzugt, dass die Kalt- und Warmluftquelle ein Gebläse mit steuerbarer Förderleistung zur Zuführung von zu temperierender Luft aufweist, und dass die Stärke des Kalt- und Warmluftstroms durch Steuerung der Förderleistung des Gebläses steuerbar ist. Damit ergibt sich eine einfache Steuerung der Stärke des Kalt- und Warmluftstroms, wobei unter Steuerung im Sinne der Erfindung auch verstanden wird, dass der tatsächlich resultierende Kalt- und Warmluftstrom je nach Stärke der folgenden Drosselungen bei gegebener angesteuerter Förderleistung variieren kann.

Dabei ist es besonders bevorzugt, dass der Warmluftstrom aus wenigstens einem Teilstrom des Kaltluftstroms gebildet wird. Bei der erfindungsgemäßen Versorgungsvorrichtung ist es bevorzugt, dass die Warmluftstromquelle stromabwärts der Kaltluftquelle angeordnet und durch von der Kaltluftquelle gebildete Kaltluft speisbar ist. Die Kaltluftquelle ist dabei stromabwärts des Gebläses angeordnet und wird von diesem mit zu kühlender Luft versorgt. Die Erwärmung nach vorheriger Abkühlung ergibt eine sehr trockene Warmluft, die sich besonders gut zur Beseitigung von Beschlag oder Eis auf Scheiben eines Kraftfahrzeugs eignet. Darüber hinaus ergibt sich ein sehr einfacher Aufbau der erfindungsgemäßen Versorgungsvorrichtung.

Um den Einbau der erfindungsgemäßen Versorgungsvorrichtung in ein Kraftfahrzeug zu erleichtern, ist es bevorzugt, dass die Kalt- und Warmluftquelle, die Drosseleinrichtungen und/oder die Zusatzfördereinrichtung und Abschnitte der Verzweigungskanäle bis zu diesen Einrichtungen zu einer Baueinheit zusammengefasst sind. Sind Teilbereichskanäle mit darin angeordneten Drosseleinrichtungen vorgesehen, so sind zumindest die Abschnitte der Teilbereichskanäle bis zu den Drosseleinrichtungen und die Drosseleinrichtungen vorzugsweise ebenfalls in der Baueinheit zusammengefasst. Auf diese Weise wird die Anzahl der beim Einbau beispielsweise in ein Kraftfahrzeug notwendigen elektrischen Verbindungen bzw. Luftkanäle weitgehend reduziert. Besonders bevorzugt sind die Kalt-und Warmluftquelle und die Drosseleinrichtungen und/oder die Zusatzfördereinrichtung in einem gemeinsamen Gehäuse angeordnet. Das Gehäuse kann dabei insbesondere auch modular aufgebaut sein.

Grundsätzlich können zur Erzeugung eines Teilstroms unabhängig von der Art der Erzeugung der anderen Teilströme Zusatzfördereinrichtung in Form von steuerbaren Zusatzgebläsen und/oder Drosseleinrichtung verwendet werden. Es ist jedoch bevorzugt, dass die jeweiligen Stärken der Teilströme durch Steuerung der Drosselung mittels entsprechender, steuerbarer Drosseleinrichtungen und ohne Steuerung einer Zusatzförderung eingestellt werden. Die erfindungsgemäße Versorgungsvorrichtung oder eine andere durch das erfindungsgemäße Steuerverfahren steuerbare Versorgungsvorrichtung weist in diesem Fall keine Zusatzfördereinrichtungen auf, wodurch nicht nur deren Aufbau wesentlich vereinfacht wird, sondern auch Energieaufnahme und Geräuschentwicklung deutlich reduziert sind.

Die Drosseleinrichtungen können grundsätzlich beliebig aufgebaut sein. Bei einer Ausführungsform der Erfindung ist es jedoch bevorzugt, dass wenigstens eine Drosseleinrichtung durch einen Abschnitt des entsprechenden, mit einem entsprechenden Auslass der Kalt- und Warmluftquelle verbundenen Verzweigungskanals und eine in dem Abschnitt oder an einem seiner Enden angeordnete Drosselklappe gebildet ist, deren Stellung steuerbar ist. Besonders bevorzugt ist die Drosselklappe durch einen entsprechenden Stellmotor, der optional eine Lagerückmeldung aufweisen kann, bewegbar. Die Drosselklappe kann dabei in Schritten oder bevorzugt kontinuierlich verstellbar sein.

Weiterhin ist es bei der erfindungsgemäßen Versorgungsvorrichtung bevorzugt, dass wenigstens eine Drosseleinrichtung ein steuerbares Filmventil aufweist. Unter einem Filmventil wird hierbei eine Drosseleinrichtung verstanden, bei der eine Durchlassöffnung, beispielsweise des Verzweigungskanals, von einem flexiblen, flächigen Element, beispielsweise einem Film, einer Folie oder einem Band, überspannt ist, das wenigstens eine Öffnung in Form eines Fensters aufweist und durch ein Stellglied so bewegbar ist, dass das Fenster wenigstens teilweise in den Bereich der Durchlassöffnung bewegbar und eine steuerbare Ventilöffnung durch den Überschneidungsbereich von Fenster und Durchlassöffnung gegeben ist. Vorzugsweise ist das Fenster auch ganz aus dem Bereich der Durchlassöffnung bewegbar. Das flexible, flächige Element kann insbesondere teilweise von zwei in verschiedenen Drehrichtungen gesteuert antreibbaren Walzen- oder Rollenelemente getragen sein, mittels derer es bewegbar ist. Der Verzweigungskanal zwischen Kalt- bzw. Warmluftquelle und Filmventil kann insbesondere auch kammerartig ausgebildet sein. Filmventile dieser Art und insbesondere bevorzugte Ausführungsformen derselben sowie Kalt- und Warmluftquellen mit Verzweigungskanälen und Filmventilen in verschiedenen Ausführungsformen, die im Rahmen der Erfindung verwendbar sind, sind in der Patentschrift US 6,273,811 B1 beschrieben.

Weiterer Gegenstand der Erfindung ist ein Computerprogramm mit Programmcode-Mitteln, um das erfindungsgemäße Verfahren durchzuführen, wenn das Programm auf einem Computer ausgeführt wird. Unter einem Computer wird hierbei insbesondere auch ein Prozessor oder Mikrocontroller mit einem damit verbundenen oder integrierten Speicher verstanden. Insbesondere ist die Steuereinrichtung der erfindungsgemäßen Versorgungsvorrichtung in diesem Sinne auch als Computer aufzufassen.

Weiterhin ist Gegenstand der Erfindung ein Computerprogrammprodukt mit Programmcode-Mitteln, die auf einem computerlesbaren Datenträger gespeichert sind, um die erfindungsgemäßen Verfahren durchzuführen, wenn das Computerprogrammprodukt auf einem Computer ausgeführt wird.

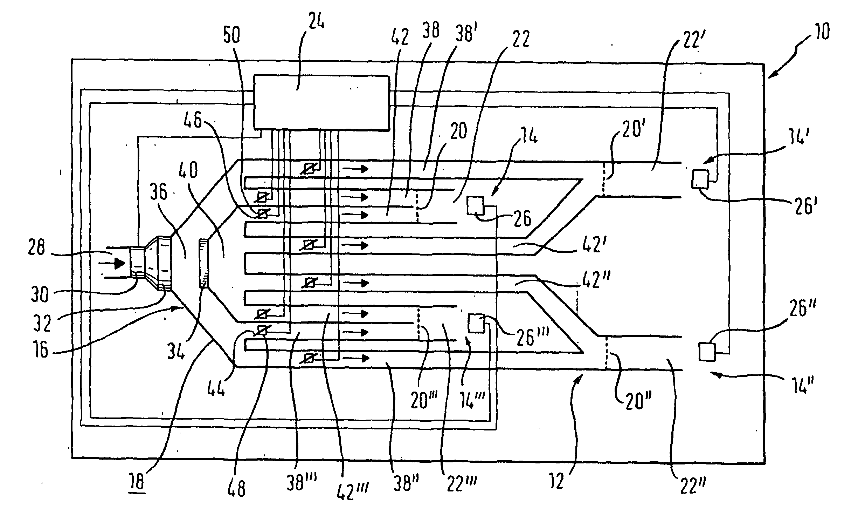

Die Erfindung wird im Folgenden weiter beispielhaft anhand der Zeichnung erläutert.
Die einzige Figur zeigt eine schematische Darstellung einer Klimaanlage in einem Kraftfahrzeug nach einer bevorzugten Ausführungsform der Erfindung.

In der Figur ist in einem Kraftfahrzeug 10 eine Versorgungsvorrichtung 12 angeordnet, mittels derer Bereichen 14, 14', 14" und 14"' innerhalb eines Innenraums des Kraftfahrzeugs 10 jeweils ein Luftstrom mit einer vorgegebenen, für den Bereich spezifischen Stärke und Temperatur zuführbar ist.

Die Versorgungsvorrichtung 12 umfasst hierzu, in der Figur nur sehr schematisch gezeigt, ein Versorgungsmodul 16 mit einem Gehäuse 18 mit vier Auslässen 20, 20', 20" und 20"' für temperierte Luft und mit den Auslässen 20, 20', 20" und 20"' verbundene Zuleitungen 22, 22', 22" und 22"' zu den jeweiligen Bereichen 14, 14', 14" und 14"'.

Weiterhin sind zur Steuerung eine Steuereinheit 24 und mit der Steuereinheit 24. verbundene Eingabeeinrichtungen 26, 26', 26" und 26"' in den Bereichen 14⁻, 14', 14", und 14''' vorgesehen.

Das Versorgungsmodul 16 weist in dem Gehäuse 18 einen Lufteinlass 28, ein stromabwärts des Lufteinlasses 28 angeordnetes Gebläse 30, einen Verdampfer 32 sowie einen Heizkern 34 auf.

Als Gebläse 30 wird ein konventionelles Gebläse eingesetzt, dessen Förderleistung durch Änderung einer Betriebsspannung eines in der Figur nicht gezeigten Antriebsmotors steuerbar ist. Das Gebläse 30 ist dazu mit einem entsprechenden Ausgang der Steuereinheit 24 verbunden.

Der Verdampfer 32 ist ein konventioneller, mit einem in der Figur nicht gezeigten, konventionell betriebenen Kältemittelkreislauf für ein Kältemittel verbundener Verdampfer, mittels dessen ihm von dem Gebläse 30 zugeführte und durch ihn hindurch tretende Luft gekühlt wird.

Als Heizkern 34 ist ein ebenfalls konventioneller Heizkern vorgesehen, der durch ihn hindurch tretende Luft unter Verwendung von Kühlwasser erwärmt, das ihm von einer Kühlung der Brennkraftmaschine zugeführt wird.

Zwischen dem Verdampfer 32 und dem Heizkern 34 ist eine Kaltluftkammer 36 ausgebildet, die zum einen in Kaltluftkanäle 38, 38', 38" und 38"' zu jeweils einem der Bereiche 14, 14', 14" und 14"' verzweigt und sich zum anderen in einen Einlass des Heizkerns 34 öffnet.

Stromabwärts des Heizkerns 34 ist eine Warmluftkammer 40 ausgebildet, die in Warmluftkanäle 42, 42', 42" und 42"' für jeweils einen der Bereiche 14, 14', 14" bzw. 14"' mündet.

In den Kaltluftkanälen 38, 38', 38" und 38"' sowie den Warmluftkanälen 42, 42', 42", 42"' sind jeweils Drosselklappen angeordnet, von denen in der Figur der Übersichtlichkeit halber nur die Drosselklappen 44 und 46 mit Bezugszeichen versehen sind.

Die Drosselklappen sind jeweils mittels Stellmotoren, von denen wiederum in der Figur nur die Stellmotoren 48 und 50 mit Bezugszeichen gekennzeichnet sind, zwischen einer geschlossenen Stellung, in der der entsprechende Kanal verschlossen ist, und einer geöffneten Stellung, in der der entsprechende Kanal maximal geöffnet ist, im Wesentlichen kontinuierlich verstellbar.

Die Stellmotoren sind jeweils mit einem entsprechenden Ausgang der Steuereinheit 24 verbunden, so dass durch Ansteuerung der Stellmotoren die Stellung der Drosselklappen und damit des Drosselwiderstands von durch die Drosselklappen und die entsprechenden, sie enthaltenden Kanäle gebildeten Drosseleinrichtungen steuerbar ist.

Die den jeweils gleichen Bereichen 14, 14', 14" oder 14"' entsprechende Kaltluftkanäle 38, 38', 38" bzw. 38"' und Warmluftkanäle 42, 42', 42" bzw. 42"' münden in die gemeinsamen Auslässe 20, 20', 20" bzw. 20"' bzw. die damit verbundenen Zuleitungen 22, 22', 22", 22"' zu den Bereichen 14, 14', 14" bzw. 14"', wo aus den Kanälen austretende Kalt- und Warmluft zu temperierter Luft gemischt wird.

Die in jeweils einem der Bereiche 14, 14', 14" oder 14'" angeordneten Eingabeeinrichtungen 26, 26', 26" und 26"' sind mit entsprechenden Eingängen der Steuereinheit 24 verbunden und dienen jeweils der Erfassung von Soll-Temperaturen und Soll-Stromstärken für temperierte Luftströme, die den entsprechenden Bereichen von der Versorgungsvorrichtung 12 zuzuführen sind. Sie sind als digitale Eingabegeräte ausgebildet, bei denen ein Benutzer durch ein- oder mehrfaches Drücken einer entsprechenden Taste eine gewünschte Soll-Temperatur bzw. Soll-Stromstärke aus einer diskreten Menge von möglichen Werten auswählen kann.

Die Steuereinheit 24 dient der Steuerung der Versorgungsvorrichtung 12, d.h. insbesondere der Betriebsspannung des Gebläses 30 und der Stellmotoren der Drosselklappen in den Kanälen 38, 38', 38" und 38"' bzw. 42, 42', 42" und 42"', in Abhängigkeit von den an den Eingabeeinrichtungen 26, 26', 26" und 26"' eingegebenen Soll-Temperaturen bzw. Soll-Stromstärken.

Sie umfasst dazu, in der Figur nicht ausdrücklich gezeigt, einen mit den Ein- und Ausgängen über entsprechende Schnittstellen verbundenen Prozessor sowie eine mit dem Prozessor verbundene Speichereinrichtung, in der zum einen permanent ein auf dem Prozessor auszuführendes Steuerprogramm sowie zur Ausführung des Steuerprogramms notwendige, im folgende beschriebene Daten gespeichert sind-und zum anderen temporäre Daten speicherbar sind.

Im Betrieb wird mittels des Gebläses 30 Luft von dem Lufteinlass 28 durch den Verdampfer 32 in die Kaltluftkammer 36 mit einer der Betriebsspannung entsprechenden Förderleistung gefördert, wobei, gegebenenfalls unter Auskondensation von Luftfeuchtigkeit, ein Kaltluftstrom gebildet wird.

In der Kaltluftkammer 36 wird der entstandene Kaltluftstrom aufgespaltet in Kaltluftteilströme in den Kaltluftkanälen 38, 38', 38" und 38"' sowie einen Anteil, der durch den Heizkern 34 hindurch in die Warmluftkammer 40 geführt und dabei unter Ausbildung eines Warmluftstroms erwärmt wird.

Der Warmluftstrom wird dann in entsprechende Warmluftteilströme in den Warmluftkanälen 42, 42', 42" und 42"' aufgeteilt.

Nach Dosierung der Kalt- und Warmluftteilströme in den Kalt- bzw. Warmluftkanälen 38, 38', 38" und 38"' bzw. 42, 42', 42" und 42"' mittels der darin angeordneten, von der Steuereinheit 24 gesteuerten Drosselklappen werden einander zugeordnete Teilströme jeweils an den Mündungen der entsprechenden Kanäle unter Ausbildung temperierter Luftströme gemischt und durch die Zuleitungen 22, 22', 22" und 22"' den entsprechenden Bereichen 14, 14', 14" und 14"' zugeführt.

Die Steuerung der Betriebsspannung für das Gebläse 30 und der Stellmotoren und damit der Stellungen der Drosselklappen für gegebene Soll-Temperaturen und Soll-Stromstärken der Luftströme für die vier Bereiche 14, 14', 14" und 14"" erfolgt unter Verwendung entsprechender Kennfelder, die jeweils als unabhängige Größen die Soll-Temperaturen und Soll-Stromstärken aller vier Bereiche aufweisen.

Um eine möglichst einfache Darstellung der Kennfelder zu erreichen, werden als abhängige Variable nicht die Betriebsspannung für das Gebläse 30 bzw. die Stellmotorsteuerspannung bzw. -signale für den jeweiligen Stellmotor, sondern die Leistung des Gebläses 30 und der Strömungswiderstand der Drosseleinrichtungen bei gegebener Stellung der Drosselklappen bzw. des Stellmotors verwendet.

Die Betriebsspannung und die Steuerspannung bzw. die Stellmotorsteuersignale ergeben sich dann mit Hilfe einer entsprechenden Kennlinie für das Gebläse 30, die die Förderleistung des Gebläses 30 in Beziehung zu dessen Betriebsspannung setzt, und entsprechender Kennlinien für die Drosseleinrichtungen, die die Stellmotorsteuerspannung bzw. die Stellmotorsteuersignale und damit die Stellung der Drosselklappe in Beziehung zu dem Strömungswiderstand der Drosseleinrichtung setzen.

Jedes der Kennfelder ist durch mehrdimensionale kubische Splines gegeben. Die Dimension der Splines ergibt sich dabei aus der Anzahl der unabhängigen Größen, das heißt der Anzahl der Bereiche multipliziert mit der Anzahl der Soll-Größen pro Bereich, im Beispiel also acht.

In der Speichereinrichtung gespeicherte Koeffizienten der Splines werden durch Anpassung an eine hinreichend große Anzahl von geeignet innerhalb und/oder am Rand des später verwendeten Wertebereichs für Soll-Temperaturen und Soll-Stromstärken-verteilten Datenpunkten ermittelt, die zuvor durch fluiddynamische Simulationsrechnungen (CFD - Rechnungen) für die Versorgungsvorrichtung 12 gewonnen werden. Bei diesen Rechnungen werden jeweils Soll-Temperaturen und Soll-Stromstärken der Luftströme für alle vier Bereiche vorgegeben und die zum Erreichen dieser Soll-Temperaturen und Soll-Stromstärken notwendige Förderleistung des Gebläses 30 und die notwendigen Strömungswiderstände der Drosseleinrichtungen berechnet. Treten bei den Simulationsrechnungen mehrere Lösungen auf, wird die Lösung verwendet, die das glatteste Kennfeld, d.h. das Kennfeld mit den geringsten maximalen Gradienten, ergibt. Um die Genauigkeit weiter zu erhöhen, können gegebenenfalls Versuche mit der realen Versorgungsvorrichtung 12 durchgeführt werden.

Zur Steuerung werden in vorgegebenen Zeitabständen von etwa 1 s die Soll-Temperaturen und Soll-Stromstärken für alle vier Bereiche 14, 14', 14" und 14'" erfasst. In der Steuereinheit 24 werden dann anhand der Kennfelder die notwendige Förderleistung des Gebläses 30 und die Strömungswiderstände der Drosseleinrichtung berechnet.

Mittels der entsprechenden Kennlinien werden daraufhin aus der Förderleistung eine anzusteuernde Betriebsspannung für das Gebläse 30 und Stellmotorsteuerspannungen bzw. -signale für die Stellmotoren der Drosselklappen berechnet und das Gebläse 30 und die Stellmotoren entsprechend angesteuert.

Durch die Berechnung der Förderleistung des Gebläses und des Strömungswiderstands der Drosseleinrichtung jeweils in Abhängigkeit von den Soll-Temperaturen und Soll-Stromstärken aller Bereiche 14, 14', 14" und 14"', kann sichergestellt werden, dass bei einer auch drastischen Änderung beispielsweise nur einer Soll-Temperatur die Drosselklappenstellungen und die Betriebsspannung des Gebläses 30 so gesteuert werden, dass die Temperaturen und Stromstärken der Luftströme zu den anderen Bereichen im Wesentlichen, d.h. hier im Rahmen der Genauigkeit des Kennfeldes, unverändert bleiben und somit kein Komfortverlust oder die Notwendigkeit eines Nachregelns durch den oder die Benutzer auftritt.

### Bezugszeichenliste

- 10: Kraftfahrzeug
- 12: Versorgungseinrichtung
- 14, 14', 14", 14"': Bereich
- 16: Versorgungsmodul
- 18: Gehäuse
- 20, 20', 20", 20"': Auslässe
- 22, 22', 22", 22"': Zuleitungen
- 24: Steuereinheit
- 26, 26', 26", 26"': Eingabeeinrichtungen
- 28: Lufteinlass
- 30: Gebläse
- 32: Verdampfer
- 34: Heizkern
- 36: Kaltluftkammer
- 38, 38', 38", 38"': Kaltluftkanäle
- 40: Warmluftkammer
- 42, 42', 42", 42"': Warmluftkanäle
- 44: Drosselklappe
- 46: Drosselklappe
- 48: Stellmotor
- 50: Stellmotor

## Patentansprüche

1. Verfahren zur Steuerung der Stärke und Temperatur von wenigstens zwei temperierten Luftströmen, die zur Temperierung wenigstens zweier entsprechender Bereiche (14, 14', 14", 14"') eines Raums, insbesondere eines Kraftfahrzeuginnenraums, dienen und die durch Bereitstellung eines Kalt- und eines Warmluftstroms, deren Temperaturen einzeln und/oder deren Stärken einzeln oder summiert steuerbar sind, Bildung jeweils eines Kalt- und Warmluftteilstroms für jeden der Bereiche (14, 14', 14", 14"') aus dem Kalt- und dem Warmluftstrom, jeweiliger Drosselung oder Zusatzförderung der Teilströme mit jeweils entsprechenden, steuerbaren Drosseleinrichtungen (44, 46, 48, 50) oder wenigstens einer Zusatzfördereinrichtung und Vermischung entsprechender Teilströme für die jeweiligen Bereiche (14, 14', 14", 14"') erzeugt werden, bei dem
für jeden der Bereiche (14, 14', 14", 14"') eine Soll-Temperatur und eine Soll-Stärke eines dem Bereich zuzuführenden Luftstroms gesetzt werden, und
die Stärke des Kaltluftstroms und/oder des Warmluftstroms und/oder wenigstens eine der Drosseleinrichtungen (44, 46, 48, 50) bzw. die Zusatzfördereinrichtung in Abhängigkeit von allen gesetzten Soll-Temperaturen und Soll-Stärken so gesteuert werden, dass für jeden der Bereiche (14, 14', 14", 14"') jeweils der temperierte Luftstrom im Wesentlichen die vorgegebene Soll-Temperatur und die vorgegebene Soll-Stromstärke aufweist,
**dadurch gekennzeichnet,**
**dass** wenigstens einer der Bereiche, für den ein erster der beiden temperierten Luftströme vorgesehen ist, in zwei Teilbereiche unterteilt ist,
**dass** die Stärken wenigstens zweier Teilbereichsluftströme für die Teilbereiche, die durch Aufteilung des ersten temperierten Luftstroms und eine Drosselung der Teilbereichsluftströme mit jeweils entsprechenden, steuerbaren Drosseleinrichtungen (44, 46, 48, 50) gebildet werden, gesteuert werden,
**dass** statt der Soll-Temperatur und Soll-Stärke des ersten Luftstroms eine gemeinsame Soll-Temperatur und jeweils eine Soll-Stärke der Teilbereichsluftströme gesetzt werden und die Soll-Stärke des ersten Luftstroms aus den Soll-Stärken der Teilbereichsluftströme und dessen Soll-Temperatur aus der gemeinsamen Soll-Temperatur bestimmt wird, und
**dass** die Stärke des Kaltluftstroms und/oder des Warmluftstroms und/oder wenigstens eine der Drosseleinrichtungen (44, 46, 48, 50) bzw. die Zusatzfördereinrichtung zusätzlich in Abhängigkeit von den gesetzten Soll-Stärken der Teilbereichsluftströme so gesteuert werden, dass für jeden der Bereiche und Teilbereiche jeweils der temperierte Luftstrom bzw. Teilbereichsluftstrom im Wesentlichen die vorgegebene Soll-Temperatur und die vorgegebene Soll-Stärke aufweist.

2. Verfahren nach Anspruch 1,
**dadurch gekennzeichnet,**
**dass** die Stärke der Drosselung bzw. Zusatzförderung aller Teilströme bzw. die Stärke der Drosselung der Teilbereichsströme und die Stärken und/oder Temperaturen des Kalt- und des Warmluftstroms unter Verwendung eines Modells gesteuert werden, das Soll-Temperaturen und Soll-Stromstärken für die Bereiche (14, 14', 14", 14"') bzw. Teilbereiche mit den zur Erreichung dieser Werte notwendigen Stärken der Drosselung bzw. Zusatzförderung aller Teilströme bzw. Stärken der Drosselung der Teilbereichsströme und den Stärken und/oder Temperaturen des Kalt- und des Warmluftstroms verknüpft.

3. Verfahren nach Anspruch 2,
**dadurch gekennzeichnet,**
**dass** Kennfelder vorgegeben werden, durch die jeweils für vorgegebene Soll-Temperaturen und Soll-Stromstärken für die temperierten Luftströme bzw. Teilbereichsströme für die Bereiche (14, 14', 14", 14"') bzw. Teilbereiche die zur Erreichung dieser Soll-Werte notwendigen Stärken und/oder Temperaturen des Kalt- und Warmluftstroms und Stärken der Drosselung bzw. Zusatzförderung der einzelnen Teilströme bzw. Stärken der Drosselung der Teilbereichsströme gegeben sind, und
**dass** die Stärke der Drosselung bzw. Zusatzförderung aller Teilströme bzw. der Drosselung der Teilbereichsströme und die Stärken und/oder Temperaturen des Kalt- und des Warmluftstroms unter Verwendung der Kennfelder gesteuert werden.

4. Verfahren nach Anspruch 3,
**dadurch gekennzeichnet,**
**dass** die Stärke der Drosselung bzw. Zusatzförderung wenigstens eines Teilstroms bzw. die Stärke der Drosselung wenigstens eines Teilbereichsstroms und die Stärken und/oder Temperaturen des Kalt- und des Warmluftstroms durch Interpolation oder Extrapolation aus einem diskreten Kennfeld gewonnen werden.

5. Verfahren nach einem der vorhergehenden Ansprüche,
**dadurch gekennzeichnet,**
**dass** das Modell unter Verwendung von Messungen erhalten wird.

6. Verfahren nach einem der vorhergehenden Ansprüche ,
**dadurch gekennzeichnet,**
**dass** das Modell durch Simulationsrechnungen erhalten wird.

7. Verfahren nach einem der vorhergehenden Ansprüche,
**dadurch gekennzeichnet,**
**dass** zur Steuerung der Stärke des Kalt- und Warmluftstroms die Förderleistung eines den Kalt- und Warmluftstrom gemeinsam erzeugenden Gebläses (30) gesteuert wird.

8. Verfahren nach einem der vorhergehenden Ansprüche,
**dadurch gekennzeichnet,**
**dass** die jeweiligen Stärken der Teilströme durch Steuerung der Drosselung mittels entsprechender, steuerbarer Drosseleinrichtungen (44, 46, 48, 50) und ohne Steuerung einer Zusatzförderung eingestellt werden.

9. Verfahren zur Temperierung von Luft für wenigstens zwei Bereiche (14, 14', 14", 14"') eines Raums, insbesondere eines Kraftfahrzeuginnenraums, bei dem
ein Kalt- und ein Warmluftstrom bereitgestellt werden, deren Temperaturen einzeln und/oder deren Stärken einzeln oder summiert steuerbar sind,
aus dem Kalt- und dem Warmluftstrom jeweils wenigstens ein Teilstrom für jeden der Bereiche (14, 14', 14", 14"') gebildet wird, und
für jeden Bereich jeweils die entsprechenden Teilströme mittels einer entsprechenden steuerbaren Drosseleinrichtung (44, 46, 48, 50) und/oder Zusatzfördereinrichtung gedrosselt und gemischt werden,
wobei die Stärke des Kaltluftstroms und/oder des Warmluftstroms und/oder die Drosseleinrichtungen (44, 46, 48, 50) und/oder Zusatzfördereinrichtungen mit dem Verfahren nach einem der Ansprüche 1 bis 8 gesteuert werden.

10. Verfahren nach Anspruch 9,
**dadurch gekennzeichnet,**
**dass** wenigstens einer der Bereiche, für den ein erster der beiden temperierten Luftströme vorgesehen ist, in zwei Teilbereiche unterteilt ist, und
**dass** für die zwei Teilbereiche aus dem ersten temperierten Luftstrom zwei Teilbereichsströme gebildet und mit jeweils entsprechenden, steuerbaren Drosseleinrichtungen gedrosselt werden,
wobei die Stärke des Kaltluftstroms und/oder des Warmluftstroms und/oder die Drosseleinrichtungen und/oder die Zusatzfördereinrichtung mit dem Verfahren nach einem der Ansprüche 1 bis 8 gesteuert werden.

11. Verfahren nach Anspruch 9 oder 10,
**dadurch gekennzeichnet,**
**dass** der Kalt- und Warmluftstrom gemeinsam mittels eines steuerbaren Gebläses (30) gebildet werden.

12. Verfahren nach einem der Ansprüche 9 bis 11,
**dadurch gekennzeichnet,**
**dass** der Warmluftstrom aus wenigstens einem Teilstrom des Kaltluftstroms gebildet wird.

13. Versorgungsvorrichtung zur Bereitstellung von Luftströmen für wenigstens zwei Bereiche (14, 14', 14", 14"') eines Raumes, insbesondere eines Kraftfahrzeuginnenraums, mit jeweils bereichsspezifischer Stärke und Temperatur mit
einer Kalt- und Warmluftquelle (30, 32, 34), mittels derer ein Kalt- und ein Warmluftstrom, deren Temperatur einzeln und/oder deren Stärken einzeln oder summiert steuerbar sind, erzeugbar und über einen Kalt- bzw. Warmluftauslass der Kalt- und Warmluftquelle (30, 32, 34) abgebbar ist,
mit dem Kalt- bzw. Warmluftauslass verbundenen Verzweigungskanälen (36,38, 38', 38", 38"', 40, 42, 42', 42", 42"') mit steuerbaren Drosseleinrichtungen (44, 46, 48, 50) und/oder wenigstens einer Zusatzfördereinrichtung, mittels derer aus dem Kalt- bzw. Warmluftstrom für jeden der Bereiche (14, 14', 14", 14"') getrennt steuerbar Kalt- und Warmluftteilströme bereitstellbar sind,
wenigstens einer Erfassungseinrichtung (26, 26', 26", 26"') zur Erfassung jeweils einer Soll-Temperatur und einer Soll-Stärke des dem jeweiligen Bereich getrennt zuzuführenden Luftstroms,
einer mit der Erfassungseinrichtung (26, 26', 26", 26"') verbundenen Steuereinrichtung (24) zur Steuerung der Kalt- und Warmluftquelle (30, 32, 34) und der Drosseleinrichtungen (44, 46, 48, 50) und/oder Zusatzfördereinrichtung in Abhängigkeit von den Soll-Temperaturen und Soll-Stärken der Luftströme für die Bereiche (14, 14', 14", 14"'), mittels derer in Abhängigkeit von den Soll-Temperaturen und/oder den Soll-Stärken der Luftströme für die Bereiche (14, 14', 14", 14"') die Kalt- und Warmluftquelle (30, 32, 34) und die Drosseleinrichtungen (44, 46, 48, 50) bzw. die Zusatzfördereinrichtung so steuerbar sind, dass die Stärken und Temperaturen der Luftströme für alle Bereiche (14, 14', 14", 14"') im Wesentlichen mit den Soll-Stärken und Soll-Temperaturen für diese Bereiche (14, 14', 14", 14"') übereinstimmen,
**dadurch gekennzeichnet,**
**dass** die Versorgungsvorrichtung zur Bereitstellung von zwei gleich temperierten Teilbereichsluftströmen für zwei Teilbereiche eines der Bereiche anstatt eines temperierten Luftstroms für diesen Bereich ausgebildet ist,
**dass** für diesen Bereich vorgesehene Verzweigungskanäle für Kalt- und Warmluft in einen Kanal münden, der in Teilbereichskanäle verzweigt, in denen jeweils eine steuerbare, mit der Steuereinrichtung verbundene Drosseleinrichtung angeordnet ist,
**dass** die Erfassungseinrichtung statt zur Erfassung der Soll-Stärke und Soll-Temperatur des dem Bereich zuzuführenden Luftstroms zur Erfassung von Soll-Stärken und einer gemeinsamen Soll-Temperatur der Teilbereichsströme ausgebildet ist,
**dass** die Steuereinrichtung zur Steuerung der Kalt- und Warmluftquelle und der Drosseleinrichtungen und/oder der Zusatzfördereinrichtung in Abhängigkeit von den Soll-Temperaturen und Soll-Stärken der Luftströme für die Bereiche und Teilbereiche, mittels derer in Abhängigkeit von den Soll-Temperaturen und/oder den Soll-Stärken der Luftströme für die Bereiche und die Teilbereiche die Kalt- und Warmluftquelle und die Drosseleinrichtungen bzw. die Zusatzfördereinrichtung so steuerbar sind, dass die Stärken und Temperaturen der Luftströme für alle Bereiche und Teilbereiche im Wesentlichen mit den Soll-Stärken und Soll-Temperaturen für diese Bereiche übereinstimmen.

14. Versorgungsvorrichtung nach Anspruch 13,
**dadurch gekennzeichnet,**
**dass** die Steuereinrichtung (24) eine Schnittstelle für die Erfassungseinrichtung sowie Schnittstellen für die Kalt- und Warmluftquelle (30, 32, 34), die Drosseleinrichtungen (44, 46, 48, 50) und/oder die Zusatzfördereinrichtung, eine Speichereinrichtung und einen mit den Schnittstellen und der Speichereinrichtung verbundenen Prozessor aufweist, wobei in der Speichereinrichtung ein mit dem Prozessor ausführbares Programm zur Durchführung des Verfahrens nach einem der Ansprüche 1 bis 8 gespeichert ist.

15. Versorgungsvorrichtung nach Anspruch 13 oder 14,
**dadurch gekennzeichnet,**
**dass** in einer Speichereinrichtung ein Kennfeld zur Durchführung des Verfahrens nach einem der Ansprüche 2 bis 5 oder einem der Ansprüche 6 und 7 und einem der Ansprüche 2 bis 5 speicherbar ist.

16. Versorgungsvorrichtung nach einem der Ansprüche 13 bis 15,
**dadurch gekennzeichnet,**
**dass** die Kalt- und Warmluftquelle (30, 32, 34), die Drosseleinrichtungen (44, 46, 48, 50) und/oder die Zusatzfördereinrichtung und Abschnitte der Verzweigungskanäle (36,38, 38', 38", 38"', 40, 42, 42', 42", 42"') bis zu diesen Einrichtungen zu einer Baueinheit zusammengefasst sind.

17. Versorgungsvorrichtung nach einem der Ansprüche 13 bis 16,
**dadurch gekennzeichnet,**
**dass** die Kalt- und Warmluftquelle (30, 32, 34) ein Gebläse (30) mit steuerbarer Förderleistung zur Zuführung von zu temperierender Luft aufweist, und
**dass** die Stärke des Kalt- und Warmluftstroms durch Steuerung der Förderleistung des Gebläses (30) steuerbar ist.

18. Versorgungsvorrichtung nach Anspruch 17,
**dadurch gekennzeichnet,**
**dass** die Warmluftstromquelle (34) stromabwärts der Kaltluftquelle (32) angeordnet und durch von der Kaltluftquelle (32) gebildete Kaltluft speisbar ist.

19. Versorgungsvorrichtung nach einem der Ansprüche 13 bis 18,
**dadurch gekennzeichnet,**
**dass** wenigstens eine Drosseleinrichtung (44, 46, 48, 50) durch einen Abschnitt des entsprechenden, mit einem entsprechenden Auslass der Kalt- und Warmluftquelle (30, 32, 34) verbundenen Verzweigungskanals (36,38, 38', 38", 38"', 40, 42, 42', 42", 42"') und eine in dem Abschnitt oder an einem seiner Enden angeordnete Drosselklappe (44, 46) gebildet ist, deren Stellung steuerbar ist.

20. Versorgungsvorrichtung nach einem der Ansprüche 13 bis 19,
**dadurch gekennzeichnet,**
**dass** wenigstens eine Drosseleinrichtung ein steuerbares Filmventil aufweist.

21. Computerprogramm mit Programmcode-Mitteln, um das Verfahren nach einem der Ansprüche 1 bis 8 durchzuführen, wenn das Programm auf einem Computer ausgeführt wird.

22. Computerprogrammprodukt mit Programmcode-Mitteln, die auf einem computerlesbaren Datenträger gespeichert sind, um das Verfahren nach einem der Ansprüche 1 bis 8 durchzuführen, wenn das Computerprogrammprodukt auf einem Computer ausgeführt wird.

## Claims

1. A method for the control of the strength and the temperature of at least two temperature controlled air flows which serve for the temperature control of at least two corresponding regions (14, 14', 14", 14"') of a space, in particular of a passenger compartment of a motor vehicle, and which are generated by making available a cold air flow and a hot air flow whose temperatures can be controlled individually and/or whose strengths can be controlled individually or when summed by forming in each case from the cold air flow and the hot air flow a cold air part flow and a hot air part flow for each of the regions (14, 14', 14", 14"'), by respective restriction or additional supply of the part flows with respectively corresponding, controllable restrictor devices (44, 46, 48, 50) or at least one additional supply device and mixing of corresponding part flows for the respective regions (14, 14', 14", 14"'), in which
a desired temperature and a desired strength of an air flow to be supplied to the region are set for each of the regions (14, 14', 14", 14"'); and
the strength of the cold air flow and/or of the hot air flow and/or at least one of the restrictor devices (44, 46, 48, 50) and/or the additional supply device are controlled in dependence on all set desired temperatures and desired strengths such that for each of the regions (14, 14', 14", 14"')the respective temperature controlled air flow substantially has the pre-set desired temperature and the pre-set desired flow strength.
**characterized**
**in that** at least one of the regions for which a first of the two temperature controlled air flows is provided is divided into two part regions;
**in that** the strengths of at least two part region air flows are controlled for those part regions which are formed by dividing the first temperature controlled air flow and by a restriction of the part region air flows by respectively corresponding controllable restrictor devices (44, 46, 48, 50);
**in that**, instead of the desired temperature and the desired strength of the first air flow, a common desired temperature and respectively a desired strength of the part region air flows are set and the desired strength of the first air flow is determined from the desired strengths of the part region air flows and its desired temperature is determined from the common desired temperature; and
**in that** the strength of the cold air flow and/or of the hot air flow and/or at least one of the restrictor devices (44, 46, 48, 50) and/or the additional supply device are additionally controlled in dependence on the set desired strengths of the part region air flows such that, for each of the regions and part regions, the temperature controlled air flow or part region air flow respectively substantially has the pre-set desired temperature and the pre-set desired strength.

2. A method in accordance with claim 1, **characterized in that** the strength of the restriction or of the additional supply of all part flows or the strength of the restriction of the part region flows and the strengths and/or temperatures of the cold air flow and of the hot air flow are controlled using a model which links desired temperatures and desired flow strengths for the regions (14, 14', 14", 14"') or part regions with the strengths of the restriction or of the additional supply of all part flows or strengths of the restriction of the part region flows and the strengths and/or temperatures of the cold air flow and of the hot air flow required to achieve these values.

3. A method in accordance with claim 2, **characterized**
**in that** characteristic fields are pre-set by which, for respective pre-set desired temperatures and desired flow strengths for the temperature controlled air flows or part region flows for the regions (14, 14', 14", 14"') or part regions, the strengths and/or temperatures of the cold air flow and of the hot air flow and the strengths of the restriction or of the additional supply of the individual part flows or strengths of the restriction of the part region flow required to achieve these desired values are defined; and
**in that** the strength of the restriction or of the additional supply of all part flows or of the restriction of the part region flows and the strengths and/or temperatures of the cold air flow and of the hot air flow are controlled using the characteristic fields.

4. A method in accordance with claim 3, **characterized in that** the strength of the restriction or of the additional supply of at least one regional part flow and/or the strength of the restriction of at least one part region flow and the strengths and/or temperatures of the cold air flow and of the hot air flow are obtained by interpolation or extrapolation from a discrete characteristic field.

5. A method in accordance with any one of the preceding claims, **characterized in that** the model is obtained using measurements.

6. A method in accordance with any one of the preceding claims, **characterized in that** the model is obtained by simulation calculations.

7. A method in accordance with any one of the preceding claims, **characterized in that** the delivery of a fan (30) generating the cold air flow and hot air flow jointly is controlled to control the strength of the cold air flow and hot air flow.

8. A method in accordance with any one of the preceding claims, **characterized in that** the respective strengths of the part flows are set by controlling the restriction by means of corresponding controllable restrictor devices (44, 46, 48, 50) and without controlling an additional supply.

9. A method of temperature controlling air for at least two regions (14, 14', 14", 14"') of a space, in particular of a passenger compartment of a motor vehicle), in which
a cold air flow and a hot air flow are made available whose temperatures are controllable individually and/or whose strengths are controllable individually or when summed;
at least one respective part flow from the cold air flow and from the hot air flow for each of the regions (14, 14', 14", 14"') is formed; and the respective corresponding part flows for each region are restricted and mixed by means of a corresponding controllable restrictor device (44, 46, 48, 50) and/or additional supply device,
wherein the strength of the cold air flow and/or of the hot air flow and/or the restrictor devices (44, 46, 48, 50) and/or additional supply devices are controlled with the method in accordance with any one of claims 1 to 8.

10. A method in accordance with claim 9, **characterized**
**in that** at least one of the regions for which a first of the two temperature controlled air flows is provided is divided into two part regions; and
**in that** two part region flows are formed from the first temperature controlled air flow for the two part regions and are restricted with respectively corresponding controllable restrictor devices,
wherein the strength of the cold air flow and/or of the hot air flow and/or the restrictor devices and/or the additional supply device are controlled with the method in accordance with any one of the claims 1 to 8.

11. A method in accordance with claim 9 or claim 10, **characterized in that** the cold air flow and the hot air flow are formed jointly by means of a controllable fan (30).

12. A method in accordance with any one of the claims 9 to 11, **characterized in that** the hot air flow is formed from at least one part flow of the cold air flow.

13. A supply apparatus to make available air flows for at least two regions (14, 14', 14", 14"') of a space, in particular of a passenger compartment of a motor vehicle, having a respective strength and temperature specific to the region, comprising
a cold and a hot air source (30, 32, 34) by means of which a cold air flow and a hot air flow can be produced and discharged via a cold air outlet and/ or a hot air outlet of the cold air source and the hot air source (30, 32, 34) and whose temperature is controllable individually and/or whose strengths are controllable individually or when summed,
branching passages (36, 38, 38', 38", 38"', 40, 42, 42', 42", 42"') connected to the cold air outlet and the hot air outlet respectively with controllable restrictor devices (44, 46, 48, 50) and/or at least one additional supply device by means of which separately controllable cold air part flows and hot air part flows can be made available for each of the regions (14, 14', 1,4", 14"') from the cold air flow and/or hot air flow;
at least one detection device (26, 26', 26", 26"') to respectively detect a desired temperature and a desired strength of the air flow to be supplied separately to the respective region;
a control device (24) connected to the detection device (26, 26', 26", 26''') to control the cold air source and the hot air source (30, 32, 34) and the restrictor devices (44, 46, 48, 50) and/or the additional supply device in dependence on the desired temperatures and the desired strengths of the air flows for the regions (14, 14', 14", 14"') by means of which the cold air source and the hot air source (30, 32, 34) and the restrictor devices (44, 46, 48, 50) and/or the additional supply device can be controlled in dependence on the desired temperatures and/or the desired strengths of the air flows for the regions (14, 14', 14", 14"') such that the strengths and temperatures of the air flows for all regions (14, 14', 14", 14"') substantially correspond to the desired strengths and desired temperatures for these regions (14, 14', 14", 14"'),
**characterized**
**in that** the supply apparatus is adapted to make available two equally temperature controlled part region air flows for two part regions of one of the regions instead of a temperature controlled air flow for this region;
**in that** branching channels for cold air and hot air provided for this region open into a passage which branches into part region passages in which a respective controllable restrictor device connected to the control device is arranged;
**in that** the detection device is made to detect desired strengths and a common desired temperature of the part region flows instead of to detect the desired strength and desired temperature of the air flow to be supplied to the region;
**in that** the control device for the controlling of the cold air source and the hot air source and the restrictor devices and/or the additional supply device are controllable in dependence on the desired temperatures and desired strengths of the air flows for the regions and part regions, by means of which the cold air source and the hot air source and the restrictor devices and/or the additional supply device can be controlled in dependence on the desired temperatures and/or on the desired strengths of the air flows for the regions and the part regions such that the strengths and temperatures of the air flows for all regions and part regions substantially correspond to the desired strengths and the desired temperatures for these regions.

14. A supply apparatus in accordance with claim 13, **characterized in that** the control device (24) has an interface for the detection device and interfaces for the cold air source and the hot air source (30, 32, 34), the restrictor devices (44, 46, 48, 50) and/or the additional supply device, a memory device and a processor connected to the interfaces and to the memory device, wherein a program which is executable with the processor is stored in the memory device to carry out the method in accordance with anyone of claims 1 to 8.

15. A supply apparatus in accordance with claim 13 or claim 14, **characterized in that** a characteristic field can be stored in a memory device to carry out the method in accordance with any one of claims 2 to 5 or any one of the claims 6 7 8 and any one of claims 2 to 5.

16. A supply apparatus in accordance with any one of the claims 13 to 15, **characterized in that** the cold air source and the hot air source (30, 32, 34), the restrictor devices (44, 46, 48, 50) and/or the additional supply device and sections of the branching passages (36, 38, 38', 38", 38"', 40, 42, 42', 42", 42"') are combined to form one component up to these devices.

17. A supply apparatus in accordance with any one of the claims 13 to 16, **characterized**
**in that** the cold air source and the hot air source (30, 32, 34) has a fan (30) with a controllable delivery to supply temperature controlled air; and
**in that** the strength of the cold air flow and of the hot air flow is controllable by control of the delivery of the fan (30).

18. A supply apparatus in accordance with claim 17, **characterized in that** the hot air flow source (34) is arranged downstream of the cold air source (32) and can be fed by cold air formed by the cold air source (32).

19. A supply apparatus in accordance with any one of the claims 13 to 18, **characterized in that** at least one restrictor apparatus (44, 46, 48, 50) is formed by a section of the corresponding branch passage (36, 38, 38', 38'', 38''', 40, 42, 42', 42'', 42''') connected to a corresponding outlet of the cold air source and of the hot air source (30, 32, 34) and by a throttle flap (44, 46) which is arranged in the section or at one of its ends and whose position is controllable.

20. A supply apparatus in accordance with any of claims 14 to 21, **characterized in that** at least one restrictor device has a controllable film valve.

21. A computer program comprising program code means to carry out the method in accordance with any one of claims 1 to 8 when the program is executed on a computer.

22. A computer program product comprising program code means which are stored on a computer readable data carrier to carry out the method in accordance with any one of the claims 1 to 8 when the computer program product is executed on a computer.

## Revendications

1. Procédé pour commander l'intensité et la température d'au moins deux écoulements d'air mis en température, qui sont utilisés pour la mise en température d'au moins deux zones correspondantes (14, 14', 14", 14''') d'un espace, notamment d'un espace intérieur d'un véhicule automobile, et qui sont produits par préparation d'un écoulement d'air froid et d'un écoulement d'air chaud, dont les températures peuvent être commandées individuellement et/ou dont les intensités peuvent être commandées individuellement ou d'une manière groupée, par formation d'un écoulement partiel d'air froid et d'air chaud pour chacune des zones (14, 14', 14", 14"') à partir de l'écoulement d'air froid et de l'écoulement d'air chaud, de l'étranglement respectif ou de l'entraînement supplémentaire respectif des écoulements partiels à l'aide de dispositifs d'étranglement commandables (44, 46, 48, 50) correspondants respectivement ou avec au moins un dispositif d'entraînement supplémentaire, et par mélange d'écoulements partiels correspondants pour les zones respectives (14, 14', 14", 14"'), selon lequel
pour chacune des zones (14, 14', 14", 14"') une température de consigne et une intensité de consigne d'un écoulement d'air devant être envoyé à la zone sont réglées, et
l'intensité de l'écoulement d'air froid et/ou de l'écoulement d'air chaud et/ou au moins l'un des dispositifs d'étranglement (44, 46, 48, 50) ou le dispositif d'entraînement supplémentaire sont commandés en fonction de toutes les températures et de toutes les intensités de consigne réglées de telle sorte que pour chacune des zones (14, 14', 14", 14"') respectivement l'écoulement d'air mis en température possède essentiellement la température de consigne prédéterminée et l'intensité d'écoulement de consigne prédéterminée,
**caractérisé en ce**
**qu'**au moins l'une des zones, pour laquelle l'un des deux écoulements d'air mis en température est prévu, divisée en deux zones partielles,
**que** des intensités d'au moins deux écoulements d'air de zones partielles pour les zones partielles qui sont formées par division du premier écoulement d'air mis en température et par un étranglement des écoulements d'air de zones partielles sont commandées avec des dispositifs d'étranglement commandables respectifs correspondants (44, 46, 48, 50),
**qu'**à la place de la température de consigne et de l'intensité de consigne du premier écoulement d'air, une température commune de consigne et respectivement une intensité de consigne des écoulements d'air de zones partielles sont réglées et l'intensité de consigne du premier écoulement d'air est déterminée à partir des intensités de consigne des écoulements d'air de zones partielles et la température de consigne de cet écoulement d'air est déterminée à partir de la température de consigne commune, et
**que** les intensités de l'écoulement d'air froid et/ou de l'écoulement d'air chaud et/ou au moins l'un des dispositifs d'étranglement (44, 46, 48, 50) ou le dispositif d'entraînement supplémentaire sont commandés en supplément en fonction des intensités de consigne réglées des écoulements d'air de zones partielles de telle sorte que pour chacune desdites zones partielles respectivement l'écoulement d'air mis en température ou l'écoulement d'air de zone partielle mis en température possède essentiellement la température de consigne prédéterminée et l'intensité de consigne prédéterminée.

2. Procédé selon la revendication 1, **caractérisé en ce**
**que** l'intensité de l'étranglement ou de l'entraînement supplémentaire de tous les écoulements partiels ou l'intensité de l'étranglement des écoulements de zones partielles et les intensités et/ou les températures de l'écoulement d'air froid et de l'écoulement d'air chaud sont commandées moyennant l'utilisation d'un modèle qui associe des températures de consigne et des intensités d'écoulement de consigne pour les zones (14, 14', 14", 14"') ou des zones partielles aux intensités, nécessaires pour l'obtention de ces valeurs, de l'étranglement ou de l'entraînement supplémentaire de tous les écoulements partiels ou des intensités, nécessaires pour l'obtention de ces valeurs, des écoulements de zones partielles et les intensités et/ou les températures de l'écoulement d'air froid et de l'écoulement d'air chaud.

3. Procédé selon la revendication 2, **caractérisé en ce**
**que** des champs de caractéristiques sont prédéterminés, champs au moyen desquels, respectivement pour des températures de consigne prédéterminées et des intensités d'écoulement de consigne prédéterminées pour les écoulements d'air ou des écoulements de zones partielles, mis en température, pour les zones (14, 14', 14", 14"') ou des zones partielles, les intensités et/ou températures, nécessaires pour l'obtention de ces valeurs de consigne, de l'écoulement d'air froid et de l'écoulement d'air chaud et les intensités, nécessaires pour l'obtention de ces valeurs, de l'étranglement ou de l'entraînement supplémentaire des écoulements partiels individuels ou les intensités, nécessaires pour l'obtention de ces valeurs de l'étranglement des écoulements de zones partielles sont déterminées, et
**que** l'intensité de l'étranglement ou de l'entraînement supplémentaire de tous les écoulements partiels ou de l'étranglement des écoulements de zones partielles et les intensités et/ou les températures de l'écoulement d'air froid et de l'écoulement d'air chaud sont commandées moyennant l'utilisation des champs de caractéristiques.

4. Procédé selon la revendication 3, **caractérisé en ce**
**que** l'intensité de l'étranglement ou de l'entraînement supplémentaire d'au moins un écoulement partiel et l'intensité de l'étranglement d'au moins un écoulement de zone partielle et les intensités et/ou les températures de l'écoulement d'air froid et de l'écoulement d'air chaud sont obtenues par interpolation ou extrapolation à partir d'un champ discret de caractéristiques.

5. Procédé selon l'une des revendications précédentes, **caractérisé en ce que**
le modèle est obtenu moyennant l'utilisation de mesures.

6. Procédé selon l'une des revendications précédentes, **caractérisé en ce**
**que** le modèle est obtenu par des calculs de simulation.

7. Procédé selon l'une des revendications précédentes, **caractérisé en ce**
**que** la puissance d'entraînement d'une soufflante (30) produisant en commun l'écoulement d'air froid et l'écoulement d'air chaud est commandée pour la commande de l'intensité de l'écoulement d'air froid et de l'écoulement d'air chaud.

8. Procédé selon l'une des revendications précédentes, **caractérisé en ce**
**que** les intensités respectives des écoulements partiels sont réglées par commande de l'étranglement au moyen de dispositifs commandables correspondants d'étranglement (44, 46, 48, 50) et sans commande d'un entraînement supplémentaire.

9. Procédé pour la mise en température de l'air pour au moins deux zones (14, 14', 14", 14"') d'un espace, notamment d'un espace intérieur de véhicule automobile, selon lequel:
un écoulement d'air froid et un écoulement d'air chaud sont préparés, écoulements dont les températures peuvent être commandées individuellement et/ou dont les intensités peuvent être commandées individuellement ou d'une manière groupée,
respectivement au moins un écoulement partiel pour chacune des zones (14, 14', 14", 14"') est formé à partir de l'écoulement d'air froid et de l'écoulement d'air chaud, et pour chaque zone respectivement les écoulements partiels correspondants sont étranglés et mélangés à l'aide d'un dispositif commandable correspondant d'étranglement (44, 46, 48, 50) et/ou d'un dispositif commandable correspondant d'entraînement supplémentaire, l'intensité de l'écoulement d'air froid et/ou de l'écoulement d'air chaud et/ou les dispositifs d'étranglement (44, 46, 48, 50) et/ou les dispositifs d'entraînement supplémentaire étant commandés à l'aide du procédé selon l'une des revendications 1 à 8.

10. Procédé selon la revendication 9, **caractérisé en ce**
**qu'**au moins l'une des zones, pour laquelle est prévu un premier des deux écoulements d'air mis en température, est subdivisé en deux zones partielles; et
**que** pour les deux zones partielles deux écoulements de zones partielles sont formés à partir du premier écoulement d'air mis en température et sont étranglés avec des dispositifs commandables correspondants respectifs d'étranglement, l'intensité de l'écoulement d'air froid et/ou de l'écoulement d'air chaud et/ou les dispositifs d'étranglement et/ou le dispositif d'entraînement supplémentaire étant commandés avec le procédé selon l'une des revendications 1 à 8,

11. Procédé selon la revendication 9 ou 10,
**caractérisé en ce que**
que l'écoulement d'air froid et l'écoulement d'air chaud sont formés conjointement à l'aide d'une soufflante commandable (30).

12. Procédé selon l'une des revendications 9 à 11,
**caractérisé en ce**
**que** l'écoulement d'air chaud est formé par au moins un écoulement partiel de l'écoulement d'air froid.

13. Dispositif d'alimentation pour la préparation d'écoulements d'air pour au moins deux zones (14, 14', 14", 14"') d'un espace, notamment d'un espace intérieur de véhicule automobile, possédant respectivement une intensité et une température spécifiques aux zones, avec
une source d'air froid et d'air chaud (30, 32, 34), au moyen de laquelle un écoulement d'air froid et un écoulement d'air chaud, dont la température est réglable individuellement et/ou dont les intensités sont commandables individuellement ou d'une manière groupée, peuvent être produits et peuvent être délivrés par l'intermédiaire d'une sortie d'air froid et d'une sortie d'air chaud de la source d'air froid et d'air chaud (30, 32, 34),
des canaux de ramification (36, 38, 38', 38", 38"', 40, 42, 42', 42", 42"'), qui sont reliés à la sortie d'air froid et à la sortie d'air chaud, comportant des dispositifs commandables d'étranglement (44, 46, 48, 50) et/ou au moins un dispositif d'entraînement supplémentaire, à l'aide desquels des écoulements partiels d'air froid et d'air chaud peuvent être préparés, d'une manière commandable séparément, à partir de l'écoulement d'air froid et de l'écoulement d'air chaud pour chacune des zones (14, 14', 14", 14"'),
au moins un dispositif de détection (26, 26', 26", 26"') pour détecter respectivement une température de consigne et une intensité de consigne de l'écoulement d'air qui doit être envoyé séparément à la zone considérée,
un dispositif de commande (24) relié au dispositif de détection (26, 26', 26", 26"') pour commander la source d'air froid et d'air chaud (30, 32, 34) et les dispositifs d'étranglement (44, 46, 48, 50) et/ou le dispositif d'entraînement supplémentaire en fonction des températures de consigne et des intensités de consigne des écoulements d'air pour les zones (14, 14', 14", 14"'), à l'aide desquelles la source d'air froid ou d'air chaud (30, 32, 34) et les dispositifs d'étranglement (44, 46, 48, 50) et/ou le dispositif d'entraînement supplémentaire peuvent être commandés en fonction des températures de consigne et/ou des intensités de consigne des écoulements d'air pour les zones (14, 14', 14", 14"') de telle sorte que les intensités et les températures des écoulements d'air autour des zones (14, 14', 14", 14"') concordent essentiellement avec les intensités de consigne et les températures de consigne pour ces zones (14, 14', 14", 14"'),
**caractérisé en ce**
**que** le dispositif d'alimentation pour la préparation de deux écoulements d'air de zones partielles, mis en température de façon identique, pour deux zones partielles de l'une des zones est formé à la place d'un écoulement d'air mis en température pour cette zone,
**que** des canaux de ramification prévus pour cette zone pour l'air froid et l'air chaud débouchent dans un canal, qui se ramifie en des canaux de zones partielles, dans lesquels est disposé respectivement un dispositif d'étranglement commandable relié au dispositif de commande,
**que** le dispositif de détection est agencé pour effectuer, à la place de la détection de l'intensité de consigne et de la température de consigne de l'écoulement d'air devant être envoyé à la zone, la détection d'intensités de consigne et d'une température de consigne commune des écoulements de zones partielles,
**que** le dispositif de commande pour la commande de la source d'air froid et d'air chaud et les dispositifs d'étranglement et/ou du dispositif d'entraînement supplémentaire, en fonction des températures de consigne et des intensités de consigne des écoulements d'air pour les zones et les zones partielles, à l'aide desquelles la source d'air froid et d'air chaud et les dispositifs d'étranglement ou le dispositif d'entraînement supplémentaire peuvent être commandés en fonction des températures de consigne et/ou des intensités de consigne des écoulements d'air pour les zones et les zones partielles, de telle sorte que les intensités et les températures des écoulements d'air pour toutes les zones et les zones partielles coïncident essentiellement avec les intensités de consigne et les températures de consigne pour ces zones.

14. Dispositif d'alimentation selon la revendication 13, **caractérisé en ce**
**que** le dispositif de commande (24) comporte une interface pour le dispositif de détection ainsi que des interfaces pour la source d'air froid et d'air chaud (30, 32, 34), les dispositifs d'étranglement (44, 46, 48, 50) et/ou le dispositif d'entraînement supplémentaire, un dispositif de mémoire et un processeur relié aux interfaces et au dispositif de mémoire, un programme pouvant être exécuté par le processeur pour la mise en oeuvre du procédé selon l'une des revendications 1 à 8 étant mémorisé dans le dispositif de mémoire.

15. Dispositif d'alimentation selon la revendication 13 ou 14, **caractérisé en ce**
**qu'**un champ de caractéristiques pour la mise en oeuvre du procédé selon l'une des revendications 2 à 5 ou l'une des revendications 6 et 7 et l'une des revendications 2 à 5 peut être mémorisé dans un dispositif de mémoire.

16. Dispositif d'alimentation selon l'une des revendications 13 à 15, **caractérisé en ce**
**que** la source d'air froid et la source d'air chaud (30, 32, 34), les dispositifs d'étranglement (44, 46, 48, 50) et/ou le dispositif d'entraînement supplémentaire à l'exception des canaux de ramification (36, 38, 38', 38", 38"', 40, 42, 42', 42", 42"') s'étendant jusqu'à ce dispositif sont réunis pour former une unité de construction.

17. Dispositif d'alimentation selon l'une des revendications 13 à 16, **caractérisé en ce**
**que** la source d'air froid et d'air chaud (30, 32, 34) comporte une soufflante (30) possédant une puissance de refoulement commandable pour la mise en oeuvre de l'air devant être mis en température, et
**que** l'intensité de l'écoulement d'air froid et de l'écoulement d'air chaud peut être commandé au moyen de la commande de la puissance de refoulement de la soufflante (30).

18. Dispositif d'alimentation selon la revendication 17, **caractérisé en ce**
**que** la source d'écoulement d'air chaud (34) est disposée en amont de la source d'air froid (32) et peut être alimentée par l'air froid formé par la source d'air froid (32).

19. Dispositif d'alimentation selon l'une des revendications 13 à 18, **caractérisé en ce**
**qu'**au moins un dispositif d'étranglement (44, 46, 48, 50) est formé par une section du canal de ramification correspondant (36, 38, 38', 38", 38"', 40, 42, 42', 42", 42"') reliée à une sortie correspondante de la source d'air froid et d'air chaud (30, 32, 34) et par un clapet d'étranglement (44, 46) disposé dans la section où sur l'une de ses extrémités et dont la position est commandable.

20. Dispositif d'alimentation selon l'une des revendications 13 à 19, **caractérisé en ce**
**qu'**au moins un dispositif d'étranglement possède une soupape commandable formée d'un film.

21. Programme informatique comportant des moyens de code de programme pour la mise en oeuvre du procédé selon l'une des revendications 1 à 8, lorsque le programme est exécuté sur un ordinateur.

22. Produit de programme informatique comportant des moyens à code de programme, qui sont mémorisés sur un support de données lisible par ordinateur, pour la mise en oeuvre du procédé selon l'une des revendications 1 à 8, lorsque le produit de programme informatique est mis en oeuvre dans un ordinateur.
